# EUROPEAN PATENT APPLICATION

(11) **EP 4 726 972 A1**
(43) Date of publication of application: **15.04.2026**
(21) Application number: 23945733.6
(22) Date of filing: 26.12.2023
(51) Int. Cl.: H02K 1/27

(54) **ROTOR STRUCTURE AND ELECTRIC MOTOR**

(30) Priority: 19.07.2023 CN 202310894191
(71) Applicant: Gree Electric Appliances, Inc. of Zhuhai, Zhuhai, Guangdong 519070 (CN); Zhuhai Kaibang Motor Manufacture Co., Ltd., Zhuhai, Guangdong 519110 (CN)
(72) Inventor: CHEN, Bin, Zhuhai, Guangdong 519070 (CN); LI, Xia, Zhuhai, Guangdong 519070 (CN); XIAO, Yong, Zhuhai, Guangdong 519070 (CN); WANG, Qingkai, Zhuhai, Guangdong 519070 (CN); HAN, Xueqiu, Zhuhai, Guangdong 519070 (CN); SHI, Jinfei, Zhuhai, Guangdong 519070 (CN)
(74) Representative: Zacco GmbH
(86) International application number: PCT/CN2023/142129
(87) International publication number: WO 2025/015855

(57) **Abstract**

Provided in the present invention are a rotor structure and an electric motor. The rotor structure includes a rotor core, first permanent magnets and a second permanent magnet, wherein the rotor core is provided with mounting recesses, the first permanent magnets are mounted in the mounting recesses, and in an axial direction of the rotor core, an axial height of each of the first permanent magnets is greater than an axial height of the rotor core; the second permanent magnet is arranged at an axial end of the rotor core, each second permanent magnet is of an integrated structure and is provided with through grooves, and at least one end of the each of the first permanent magnets protrudes from the rotor core in the axial direction and is inserted into a corresponding one of through grooves; and the second permanent magnet further includes first permanent magnet limiting portions and magnetic pole portions, and at least one of the first permanent magnet limiting portions is provided between each pair of adjacent magnetic pole portions and connects the pair of adjacent magnetic pole portions, such that the magnetic pole portions form a whole. According to the rotor structure in the present invention, the magnetic flux gathering effect of the electric motor can be effectively improved, and the structural strength of a rotor can be increased.

## Description

The present application claims priority to Chinese Patent Application No. 202310894191.X on July 19, 2023, and entitled "Rotor Structure and Electric Motor".

### Technical Field

The present invention relates to the technical field of motors, and in particular to a rotor structure and an electric motor.

### Background

With improvement of electric motor energy efficiency standards, a higher requirement is put forward for an efficiency level of an electric motor. For a permanent magnet motor, degrees of high efficiency and high torque density of the electric motor need to be further improved.

At present, for technical means of improving efficiency and torque density of the electric motor, one means is to arrange a permanent magnet inside a rotor so as to obtain a larger air gap magnetic density and a larger magnetic flux. However, because a rotor magnetic circuit structure is fixed, energy efficiency improvement is constrained. Another means is to increase a salient-pole ratio of the electric motor by using a rotor structure and increase a reluctance torque of the electric motor, so as to compensate for a shortage of a permanent magnet torque. Efficiency of the electric motor may be equivalent to that of the permanent magnet motor, but a relatively large rotor volume is usually required, so that a torque density of the electric motor is inferior to that of the permanent magnet motor.

Therefore, for an existing electric motor, how to further implement high efficiency and high torque density of the electric motor is an urgent problem to be solved.

### Summary

The present invention provides a rotor structure and an electric motor, which is able to effectively improve a magnetic flux gathering effect of the electric motor, and increase a structural strength of a rotor.

To achieve the foregoing object, according to one aspect of the present invention, a rotor structure is provided, including a rotor core, first permanent magnets and a second permanent magnet, where the rotor core is provided with mounting recesses, the first permanent magnets are mounted in the mounting recesses, and in an axial direction of the rotor core, an axial height of each of the first permanent magnets is greater than an axial height of the rotor core;
the second permanent magnet is arranged at an axial end of the rotor core, the second permanent magnet is of an integrated structure and is provided with through grooves, and at least one end of the each of the first permanent magnets protrudes from the rotor core in the axial direction and is inserted into a corresponding one of the through grooves; and
the second permanent magnet further includes first permanent magnet limiting portions and magnetic pole portions, and at least one of the first permanent magnet limiting portions is provided between each pair of adjacent magnetic pole portions and connects the pair of adjacent magnetic pole portions, such that the magnetic pole portions form a whole.

In some embodiments, the first permanent magnet limiting portions are located on a radial outer side of the through grooves and are disposed in correspondence with the through grooves, and the each of the first permanent magnet limiting portions is connected with the second permanent magnet on both sides in a circumferential direction.

In some embodiments, through holes are formed in a radial inner side of the second permanent magnet, and each of the through grooves communicates with at least one of the through holes.

In some embodiments, the through holes are formed in a side of the mounting recesses of the rotor core close to a central axis of the rotor core, and the through holes penetrate through the rotor core and the second permanent magnet.

In some embodiments, the each of the first permanent magnets is tangentially magnetized, and the second permanent magnet is axially magnetized; and/or the each of the first permanent magnet limiting portions includes a radial projection, a cross-sectional shape of an outer peripheral surface of magnetic pole portions on both sides of the radial projection is circular arcs, and a diameter of the circular arc is not greater than a diameter of an outer circle of the rotor structure.

In some embodiments, the second permanent magnet is injection-molded magnet steel.

In some embodiments, at least one end of axial ends of the rotor core is provided with the second permanent magnet.

In some embodiments, the first permanent magnets and the second permanent magnet are both magnetic flux sources, and except the rotor core, other magnetic conductive parts are not arranged in the rotor structure.

In some embodiments, the axial height of the rotor core is x, the axial height of the each of the first permanent magnets is y, y>x, and an axial height of the second permanent magnet is z, where 0.2×(y-x)≤z≤1.2×(y-x).

In some embodiments, z≤0.5×(y-x).

In some embodiments, an outer peripheral wall of the rotor core includes a plurality of circular arc surfaces disposed at intervals, and in a circumferential direction, a distance between the circular arc surfaces and a central axis of the rotor core decreases from a middle to both ends.

In some embodiments, on a plane perpendicular to an axial direction of the rotor core, an outer diameter of the second permanent magnet has a maximum value of Do2, and an outer diameter of the rotor core has a maximum value of Do1, where Do2≤Do1.

In some embodiments, Do2=Do1.

In some embodiments, a polarity area of each of the magnetic pole portions is disposed in correspondence with each of polarity areas of the rotor core.

In some embodiments, the polarity area of the each of the magnetic pole portions is adapted to an area shape of a corresponding polarity area of the rotor core, and the polarity area of the each of the magnetic pole portions is filled in the corresponding polarity area of the rotor core.

In some embodiments, the second permanent magnet is injection-molded ferrite or injection-molded neodymium iron boron.

In some embodiments, N and S poles of the second permanent magnet are magnetized alternately in the axial direction of the rotor core.

In some embodiments, a polarity of a polarity area of the second permanent magnet on a side close to the rotor core is a first polarity, and polarities of two first permanent magnets located on two sides adjacent to the second permanent magnet on sides close to the rotor core are the first polarity.

In some embodiments, each of the first permanent magnets is a sintered permanent magnet or an injection-molded permanent magnet.

In some embodiments, the rotor core is formed by laminating silicon steel sheets, or, the rotor core is an injection-molded magnet, and on a plane perpendicular to the axial direction of the rotor core, N and S poles of the rotor core are magnetized alternately in a radial direction.

In some embodiments, the rotor structure is filled with a molding compound at ends and internal gaps and is molded into a whole body, and the molding compound is filled in the through hole.

According to the other aspect of the present invention, a motor is provided, including a stator structure and the foregoing rotor structure.

By using the technical solution in the present invention, the rotor structure includes a rotor core, first permanent magnets and a second permanent magnet, where the rotor core is provided with mounting recesses, the first permanent magnets are mounted in the mounting recesses, and in an axial direction of the rotor core, an axial height of each of the first permanent magnets is greater than an axial height of the rotor core; the second permanent magnet is arranged at an axial end of the rotor core, the second permanent magnet is of an integrated structure and is provided with through grooves, and at least one end of the each of the first permanent magnets protrudes from the rotor core in the axial direction and is inserted into a corresponding one of the through grooves; and the second permanent magnet further includes first permanent magnet limiting portions and magnetic pole portions, and at least one of the first permanent magnet limiting portions is provided between each pair of adjacent magnetic pole portions and connects the pair of adjacent magnetic pole portions, such that the magnetic pole portions form a whole.

The first permanent magnets and the second permanent magnets are simultaneously disposed in the rotor structure, and the first permanent magnets and the second permanent magnets jointly provide flux linkage for the electric motor, so as to increase a torque density of the electric motor. The relative position design of the first permanent magnets and the second permanent magnet is able to make a part of the first permanent magnets that is higher than the rotor core to serve as a part of a magnetic circuit through which magnetic field lines of the second permanent magnet flow. After aggregation on the rotor core, the magnetic field lines of the first permanent magnet and the second permanent magnet enter an air gap and a stator, thereby improving a magnetic flux gathering effect of the electric motor, effectively improving efficiency and torque density of the electric motor, and increasing output power of the electric motor. The first permanent magnets not only serve as a magnetic flux source, but also are able to pull the magnetic field lines of the second permanent magnet into the rotor core, thereby improving a utilization rate of the first permanent magnets. The first permanent magnet limiting portions are disposed on the second permanent magnet, and a magnetic flux leakage of the first permanent magnets is able to be suppressed because a polarity of the first permanent magnet limiting portions is exclusive to a polarity of the first permanent magnets. The through holes are formed in the second permanent magnet, and the through holes penetrate through the rotor core and the second permanent magnet, and the molding compound is filled in the through holes, so as to increase structural strength of the rotor.

### Brief Description of the Drawings

Drawings of the specification, which form a part of the present invention, are used for providing further understanding of the present invention, and schematic embodiments and description thereof in the present invention are used for explaining the present invention and are not to be construed as an undue limitation of the present invention. In the accompanying drawings,
FIG. 1 shows an exploded structural view of a rotor structure according to an embodiment of the present invention;
FIG. 2 shows a three-dimensional structural view of a rotor structure according to an embodiment of the present invention;
FIG. 3 shows a side structural view of a rotor structure according to an embodiment of the present invention;
FIG. 4 shows a three-dimensional structural view of a second permanent magnet according to an embodiment of the present invention;
FIG. 5 shows a top structural view of a second permanent magnet according to an embodiment of the present invention;
FIG. 6 shows a section view of FIG. 5 in A-A direction;
FIG. 7 shows a section view of FIG. 5 in B-B direction;
FIG. 8 shows a three-dimensional structural view of a rotor assembly according to an embodiment of the present invention;
FIG. 9 shows a top view of a rotor assembly according to an embodiment of the present invention;
FIG. 10 shows a three-dimensional structural view of a rotor assembly according to an embodiment of the present invention;
FIG. 11 shows a top view of a rotor assembly according to an embodiment of the present invention;
FIG. 12 shows a three-dimensional structural view of a rotor assembly according to an embodiment of the present invention;
FIG. 13 shows a top view of a rotor assembly according to an embodiment of the present invention;
FIG. 14 shows a sectional view taken along a line A-A of Fig. 13;
FIG. 15 shows a sectional view taken along a line B-B of Fig. 13;
FIG. 16 shows a sectional view taken along a line C-C of Fig. 13;
FIG. 17 shows a schematic view of a magnetic circuit of a rotor structure according to an embodiment of the present invention;
FIG. 18 shows a comparison view of magnetic gathering coefficients of an electric motor according to an embodiment of the present invention and an electric motor in the related art;
FIG. 19 shows a utilization rate comparison view of first permanent magnets of an electric motor according to an embodiment of the present invention and an electric motor in the related art;
FIG. 20 shows a comparison view of leakage magnetic fluxes of first permanent magnets of an electric motor according to an embodiment of the present invention and an electric motor in the related art;
FIG. 21 shows a comparison view of no-load flux linkage of an electric motor according to an embodiment of the present invention and an electric motor in the related art;
FIG. 22 shows a comparison view of air-gap flux densities of an electric motor according to an embodiment of the present invention and an electric motor in the related art; and
FIG. 23 shows a comparison view of torque-current characteristics of an electric motor according to an embodiment of the present invention and an electric motor in the related art.

Reference signs in the accompanying diagrams:
11: rotor core; 12: first permanent magnet; 21: second permanent magnet; 22: through groove; 23: first permanent magnet limiting portion;
24: magnetic pole portion; and 25: through hole.

### Detailed Description of the Embodiments

It needs to be illustrated that, the embodiments in the present invention and the features in the embodiments can be combined with each other. The present invention will be described in detail below with reference to the accompanying drawings in conjunction with the embodiments.

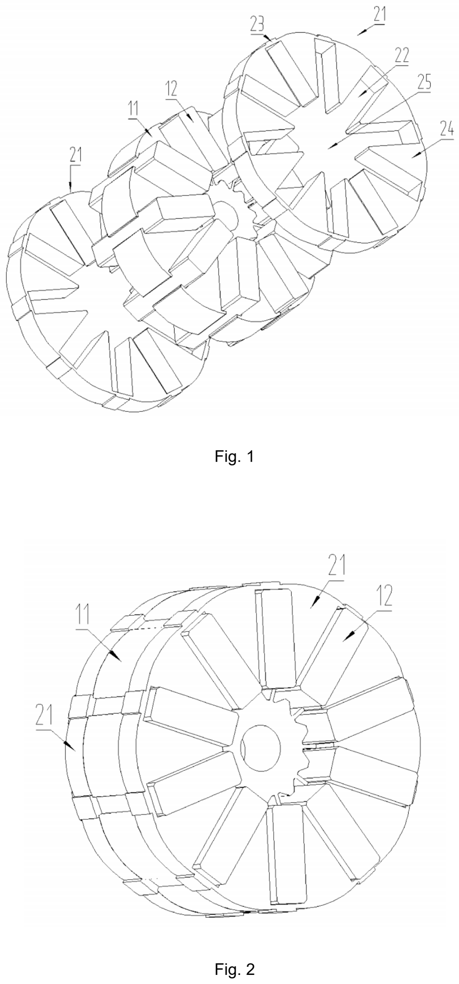

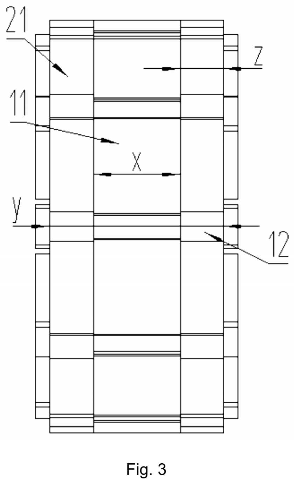

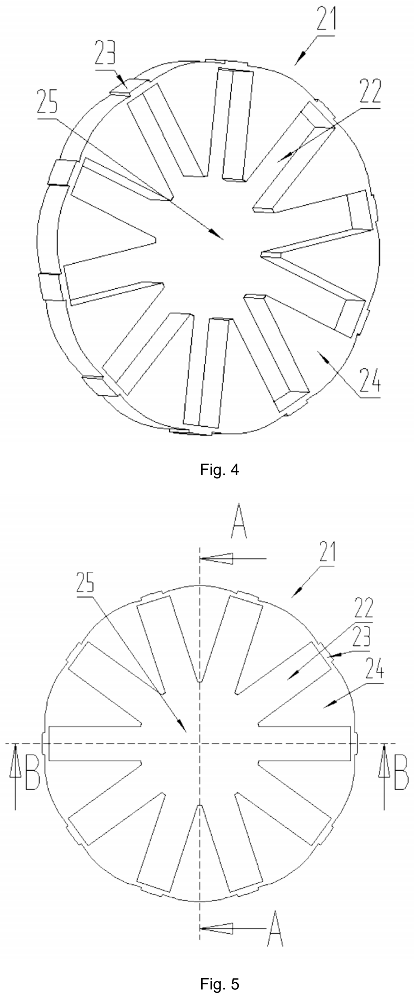

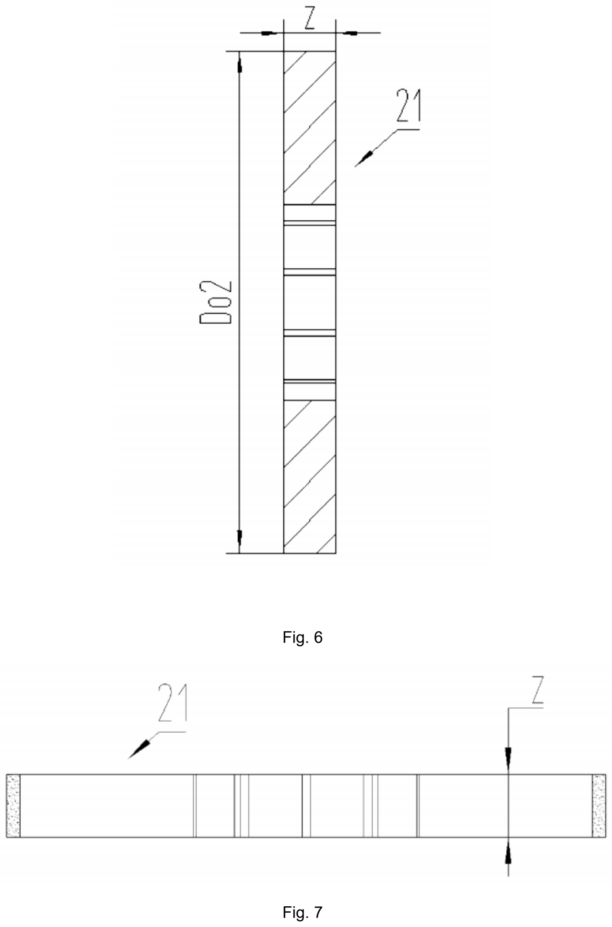

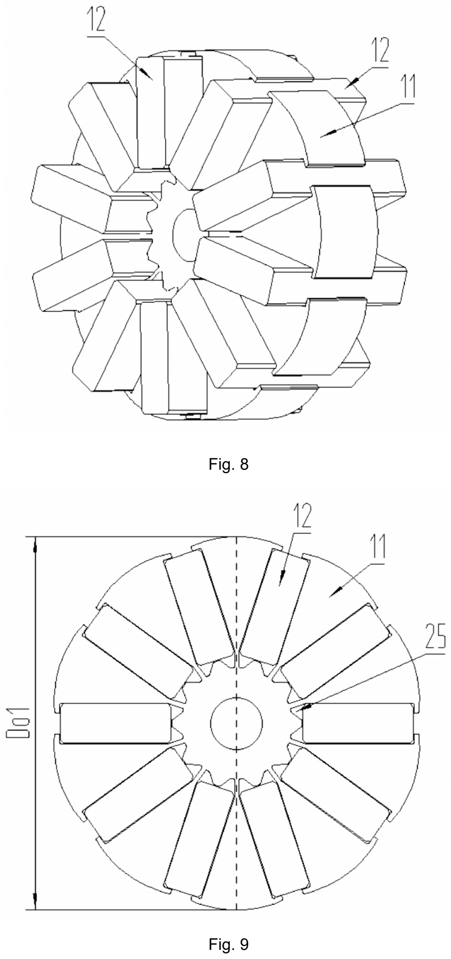

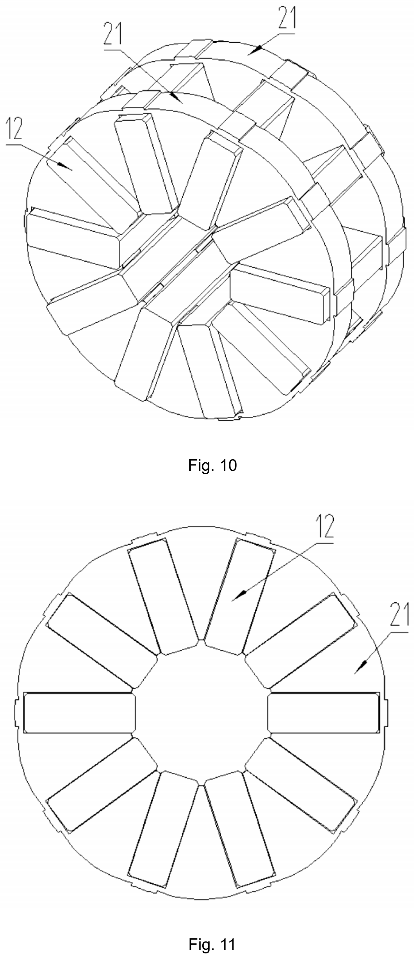

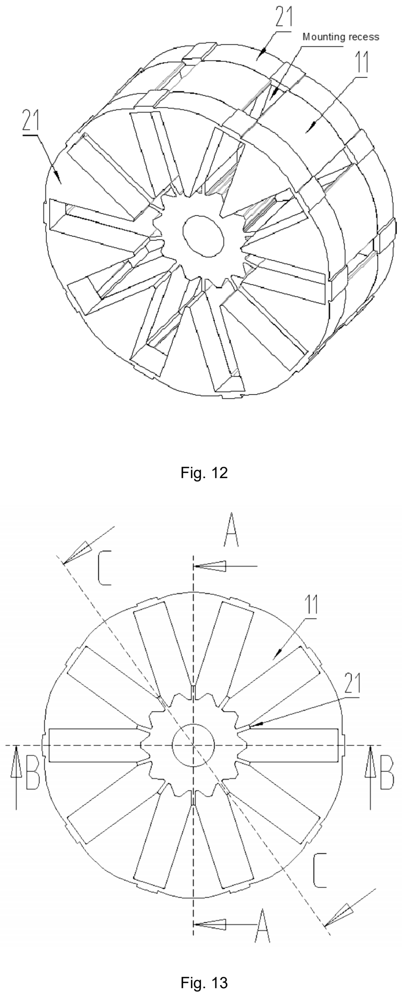

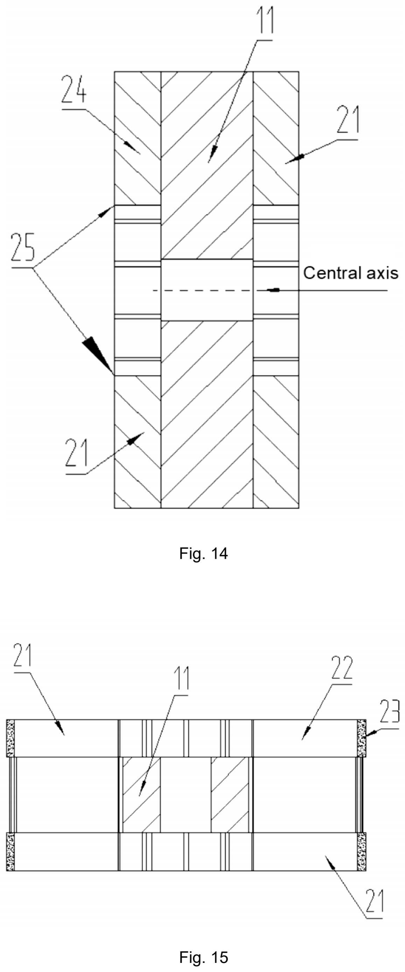

With reference to FIG. 1 to FIG. 16, according to the embodiments of the present invention, the rotor structure includes a rotor core 11, first permanent magnets 12 and a second permanent magnet 21, where the rotor core 11 is provided with mounting recesses, the first permanent magnets 12 are mounted in the mounting recesses, and in an axial direction of the rotor core 11, an axial height of each first permanent magnet 12 is greater than an axial height of the rotor core 11; and the second permanent magnet 21 is arranged at an axial end of the rotor core 11, the second permanent magnet 21 is of an integrated structure and is provided with through grooves 22, and at least one end of each first permanent magnet 12 protrudes from the rotor core 11 in the axial direction and is inserted into a corresponding through groove 22. The second permanent magnet 21 further includes first permanent magnet limiting portions 23 and magnetic pole portions 24, and at least one of the first permanent magnet limiting portions 23 is provided between each pair of adjacent magnetic pole portions 24 and connects the pair of adjacent magnetic pole portions 24, such that the magnetic pole portions 24 form a whole.

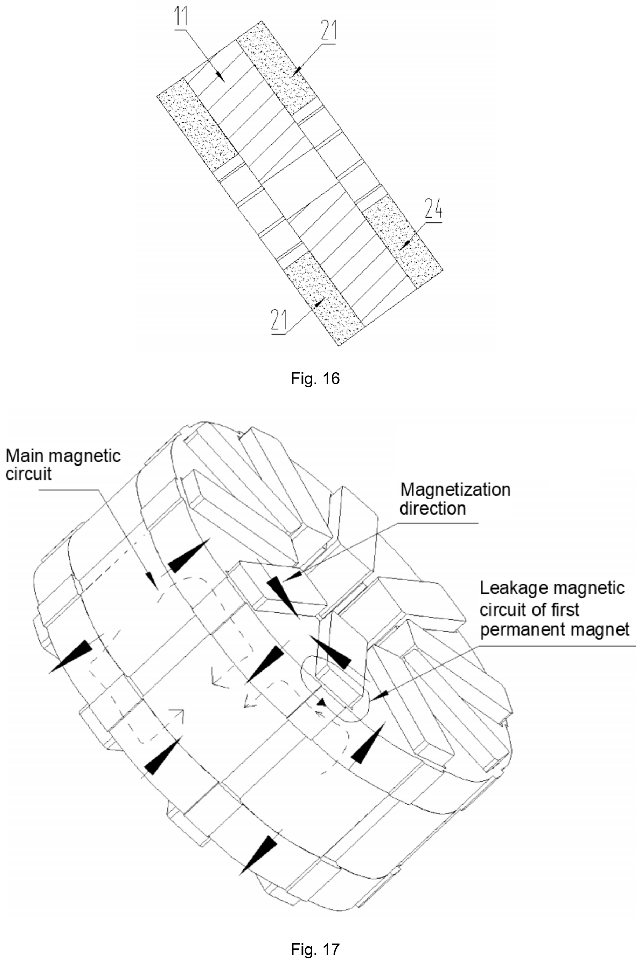

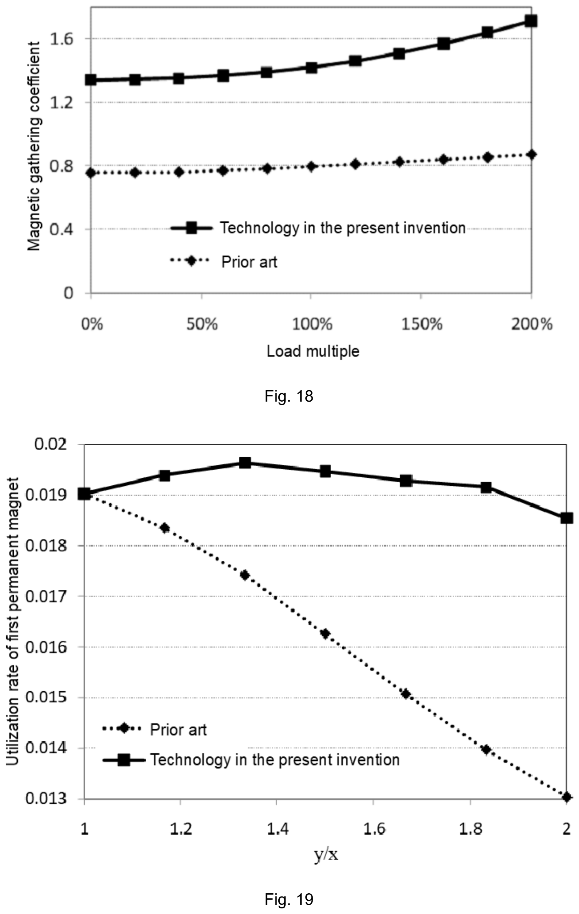

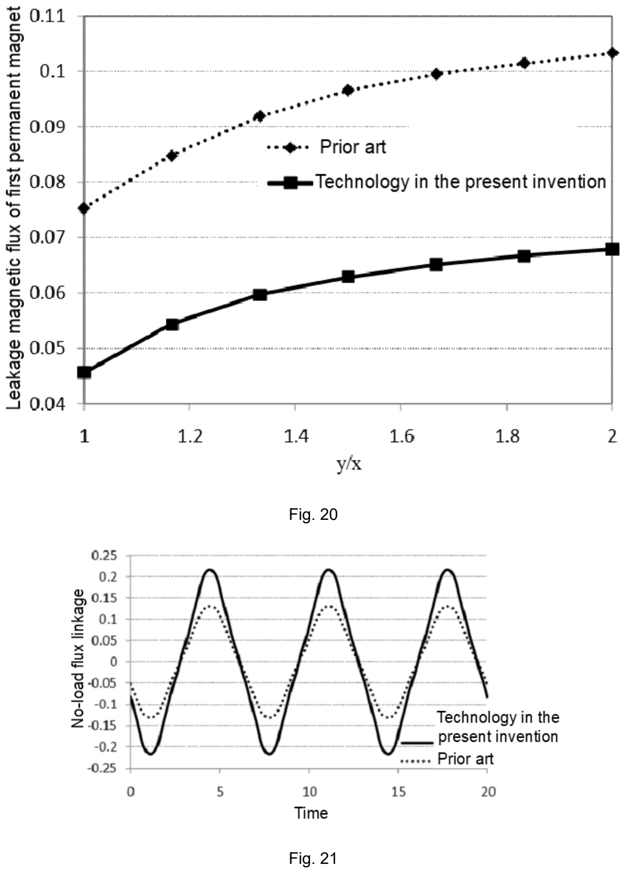

As shown in FIG. 17, the first permanent magnets 12 and the second permanent magnets 21 are disposed in the rotor structure, and the first permanent magnets 12 and the second permanent magnets 21 jointly provide flux linkage for the electric motor, so as to increase a torque density of the electric motor. The first permanent magnets 12 and the second permanent magnets 21 are designed at relative positions, so that a part of the first permanent magnet 12 that is higher than the rotor core 11 is used as a part of a magnetic circuit in which magnetic field lines of the second permanent magnet 21 flow. After concentration on the rotor core 11, the magnetic field lines of the first permanent magnet 12 and the second permanent magnet 21 enter an air gap and a stator, thereby improving a magnetic flux gathering effect of the electric motor, effectively improving efficiency and torque density of the electric motor, and increasing output power of the electric motor. The first permanent magnet 12 not only serves as a magnetic flux source, but also is able to pull the magnetic field lines of the second permanent magnet 21 into the rotor core, thereby improving a utilization rate of the first permanent magnet 12. As shown in FIG. 19, compared with an electric motor in the related art, the utilization rate of the first permanent magnet 12 of the electric motor that uses the rotor structure according to the embodiment of the present invention is significantly improved, mainly because in the rotor structure of the present invention, a utilization rate of a part of the first permanent magnet 12 that protrudes from the rotor core 11 is improved. The first permanent magnet limiting portion 23 is disposed on the second permanent magnet 21, and a magnetic flux leakage of the first permanent magnet 12 is able to be suppressed because a polarity of the first permanent magnet limiting portion 23 is exclusive to a polarity of the first permanent magnet 12. As shown in FIG. 20, compared with an electric motor in the related art, the leakage flux of the first permanent magnet 12 of the electric motor that uses the rotor structure according to the embodiment of the present invention is obviously reduced.

In some embodiments, the first permanent magnet limiting portions 23 are located on a radial outer side of the through grooves 22 and are disposed in correspondence with the through grooves 22, and each of the first permanent magnet limiting portion 23 is connected with the second permanent magnet 21 on both sides in a circumferential direction. That is, the first permanent magnet limiting portions 23 and the through grooves 22 are disposed in a one-to-one correspondence.

In one embodiment, through holes 25 are formed in a radial inner side of the second permanent magnet 21, and each of the through grooves 22 communicates with at least one of the through holes 25. The second permanent magnet 21 forms a whole depending on a connection of the first permanent magnet limiting portions 23 disposed on a radial outer side of the second permanent magnet 21. Each magnetic pole portion 24 of the second permanent magnet 21 extends radially inward, and a plurality of magnetic pole portions 24 are radiated.

In some embodiments, a through hole 25 is also formed in a side of a mounting recess of the rotor core 11 close to a central axis of the rotor core 11. A plurality of through holes 25 are formed in the second permanent magnet 21, and the through holes penetrates through the rotor core 11 and the second permanent magnet 21. A molding compound is filled in the through holes, so as to increase structural strength of the rotor.

In some embodiments, each of the first permanent magnets 12 is tangentially magnetized, and the second permanent magnet 21 is axially magnetized. In the present embodiment, the first permanent magnets 12 with a larger axial height is set to be tangentially magnetized, and the second permanent magnet 21 disposed at an axial end of the rotor core 11 is set to be tangentially magnetized, so that continuity of flux linkage between the first permanent magnets 12 and the second permanent magnet 21 is able to be implemented, and the first permanent magnet 12 and the second permanent magnet 21 are able to jointly provide flux linkage for an electric motor more effectively, and output power of the electric motor is able to be effectively increased.

In one embodiment, each of the first permanent magnet limiting portions 23 includes a radial projection, a cross-sectional shape of an outer peripheral surface of magnetic pole portions 24 on both sides of the radial projection is circular arcs, and a diameter of the circular arc is not greater than a diameter of an outer circle of the rotor structure.

In the present embodiment, a radial projection is disposed at a position of the first permanent magnet limiting portion 23 corresponding to the mounting recess, so that a thickness of the first permanent magnet limiting portion 23 at the position is able to be increased, and structural strength at a main force position of a centrifugal force of the second permanent magnet 21 in a running process of the electric motor is able to be enhanced, so as to avoid deformation of the first permanent magnet limiting portion 23 at the position.

In one embodiment, the second permanent magnet 21 is injection-molded magnet steel. On one hand, the injection-molded magnet steel is able to reduce the rotor saturation and iron consumption. On the other hand, the injection-molded magnet steel has a higher shape freedom degree, which is able to reduce manufacturing difficulty of the second permanent magnet 21.

In one embodiment, the second permanent magnet 21 is injection-molded ferrite or injection-molded neodymium iron boron. The second permanent magnet 21 may alternatively be injection-molded magnet steel of other material types.

In one embodiment, at least one end of the axial ends of the rotor core 11 is provided with the second permanent magnet 21. Therefore, magnetic circuits at ends of the electric motor are able to be arranged, so that a torque density is larger, the efficiency of the electric motor is higher, and high performance of the electric motor is ensured.

In one embodiment, the second permanent magnets 21 are respectively disposed at both axial ends of the rotor core 11.

In an embodiment, a support projection protruding outward radially is disposed on a side wall of a radial inner side of the mounting recess of the rotor core 11, and a top shape of the support projection matches with a side wall of a radial inner side of the first permanent magnet 12 and forms surface contact.

In the present embodiment, through holes 25 are formed between both sides of the support projection and side walls of the mounting recess. A top shape of the support projection is adapted to a surface of the first permanent magnet 12 facing the support projection, so that a surface contact is able to be formed between the support projection and the first permanent magnet 12. Therefore, the support projection is used to mount and locate the first permanent magnet 12.

In one embodiment, the first permanent magnet 12 and the second permanent magnet 21 are both magnetic flux sources, and except the rotor core 11, other magnetic conductive parts are not arranged in the rotor structure.

In one embodiment, the axial height of the rotor core 11 is x, the axial height of the first permanent magnet 12 is y, y>x, and an axial height of the second permanent magnet 21 is z, where 0.2×(y-x)≤z≤1.2×(y-x). By defining a relationship among axial heights of the rotor core 11, the first permanent magnet 12, and the second permanent magnet 21, on one hand, high utilization rates of the rotor core 11 and the permanent magnet material are able to be ensured, and on the other hand, a magnetic flux leakage at a rotor end is able to be minimized by size coordination in the range.

In some embodiments, z≤0.5×(y-x) is a better dimensional fit. In this case, the magnetic field lines of the second permanent magnet 21 may enter the rotor core 11 completely by pulling of the first permanent magnet 12. In addition, the second permanent magnet 21 further blocks a self-leakage flux path of the first permanent magnet 12, thereby improving the utilization rate of the permanent magnet. In one embodiment, z=0.5×(y-x).

In one embodiment, an outer peripheral wall of the rotor core 11 includes a plurality of circular arc surfaces disposed at intervals, and in a circumferential direction, a distance between the circular arc surfaces and a central axis of the rotor core 11 decreases from a middle to both ends.

In the present embodiment, because the rotor core 11 forms an opening groove structure, an outer circumferential structure of the rotor core 11 is not an integral circle, but a plurality of circular arc segments disposed at intervals, and a middle of each circular arc segment protrudes radially outward to form a circular arc structure that is offset from a center of the outer circle of the rotor, which is able to improve an air gap flux density between the stator and the rotor, further help to form a sine curve, and improve working performance of the electric motor.

In one embodiment, on a plane perpendicular to an axial direction of the rotor core 11, an outer diameter of the second permanent magnet 21 has a maximum value of Do2, and an outer diameter of the rotor core 11 has a maximum value of Do1, where Do2≤Do1.

In one embodiment, Do2=Do1.

For the electric motor, on one hand, a stator structure sleeves an outer side of the rotor structure, and the air gap is disposed between the rotor structure and the stator structure. This setting may give way to assembly of the stator structure. On the other hand, to ensure that the first permanent magnet 12 does not fall off after being assembled into the rotor core 11, the outer circle of the rotor core 11 may be provided with a clamping point, and a magnetic circuit of the clamping point is small in area and easy to saturate, and a position of the clamping point is close to the air gap, which is a magnetic flux gathering region. Iron consumption herein is large. Do2≤Do1 may enable magnetic flux of the second permanent magnet 21 to avoid a position of the clamping point, thereby reducing iron consumption of the electric motor. In the electric motor with less iron consumption, Do2=Do1 is a better choice.

In one embodiment, a polarity area of the magnetic pole portion 24 is disposed in correspondence with a polarity area of the rotor core 11.

In one embodiment, the polarity area of the magnetic pole portion 24 is adapted to an area shape of a corresponding polarity area of the rotor core 11, and the polarity area of the magnetic pole portion 24 is filled in the corresponding polarity area of the rotor core 11. "Fill" herein means that there is no gap between the rotor core 11 and the second permanent magnet 21 on a plane perpendicular to the axial direction of the rotor core 11.

In one embodiment, magnetic flux is generated in one polarity area of the magnetic pole portion 24, and one polarity area of the rotor core 11 at a corresponding position is a magnetic circuit of the magnetic flux. The polarity area of the magnetic pole portion 24 and the polarity area of the rotor core 11 are correspondingly set to shorten the magnetic circuit as much as possible, so as to reduce magnetic loss.

In one embodiment, N and S poles of the second permanent magnet 21 are magnetized alternately in the axial direction of the rotor core 11.

In one embodiment, the polarity of the second permanent magnet 21 on a side close to the rotor core 11 is a first polarity, and polarities of two first permanent magnets 12 located on two sides adjacent to the second permanent magnet 21 on sides close to the rotor core 11 are the first polarity.

In the embodiment shown in FIG. 17, the second permanent magnet 21 is axially magnetized, and the first permanent magnet 12 is tangentially magnetized. The magnetic field lines of the second permanent magnet 21 enter the rotor core 11 by using a part of the first permanent magnet 12 that protrudes from the rotor core 11 as a magnetic circuit, and after magnetic gathering with magnetic field lines generated by a part of the first permanent magnet 12 inserted into the rotor core 11, the magnetic field lines of the first permanent magnet 12 and the second permanent magnet 21 enter the air gap and the stator through the rotor core 11, so that a magnetic flux gathering effect of the electric motor is able to be greatly improved, and motor torque density and efficiency of the electric motor are able to be improved.

In one embodiment, the first permanent magnet 12 is a sintered permanent magnet or an injection-molded permanent magnet which is determined based on usage occasions and invention temperatures of the electric motor.

In one embodiment, the rotor core 11 is formed by laminating silicon steel sheets, or, the rotor core 11 is an injection-molded magnet, and on a plane perpendicular to an axial direction of the rotor core 11, N and S poles of the rotor core 11 are magnetized alternately in a radial direction.

The rotor core 11 is a path carrier that flows through the flux linkage between the first permanent magnet 12 and the second permanent magnet 21, and serves to facilitate and guide the flux linkage.

In one embodiment, the rotor core 11 is formed by laminating silicon steel sheets, and has better magnetic conductivity.

In one embodiment, the rotor core 11 is injection-molded magnet steel. After magnetization, the rotor core 11 has a pulling effect on the magnetic field lines of the first permanent magnet 12 and the second permanent magnet 21, and may also guide magnetic flux to concentrate and then enter the air gap and the stator.

In one embodiment, the rotor structure is filled with a molding compound at ends and internal gaps and is molded into a whole body, and the molding compound is filled in the through holes 25, so that integral structural strength of the rotor assembly is able to be ensured.

With reference to FIG. 18, compared with an electric motor in the related art, the magnetic flux gathering coefficient of the electric motor that uses the rotor structure according to the embodiment of the present invention is improved by more than 60%, and the magnetic flux gathering performance is obviously improved.

As shown in FIG. 19, compared with an electric motor in the related art, the utilization rate of the first permanent magnet the electric motor that uses the rotor structure according to the embodiment of the present invention is higher, a trend of improving the utilization rate of the first permanent magnet is increased with increase of y/x. When y/x is equal to 2, the utilization rate of the first permanent magnet is improved by 42%.

With reference to FIG. 20, compared with an electric motor in the related art, the leakage magnetic flux of the first permanent magnet of the electric motor that uses the rotor structure according to the embodiment of the present invention is obviously reduced. When y/x is equal to 2, the leakage magnetic flux of the first permanent magnet is reduced by 34%.

With reference to FIG. 21, compared with an electric motor in the related art, the no-load flux linkage of the electric motor that uses the rotor structure according to the embodiment of the present invention is increased by more than 50%, so that the no-load flux linkage is effectively increased, and the performance of the electric motor is improved.

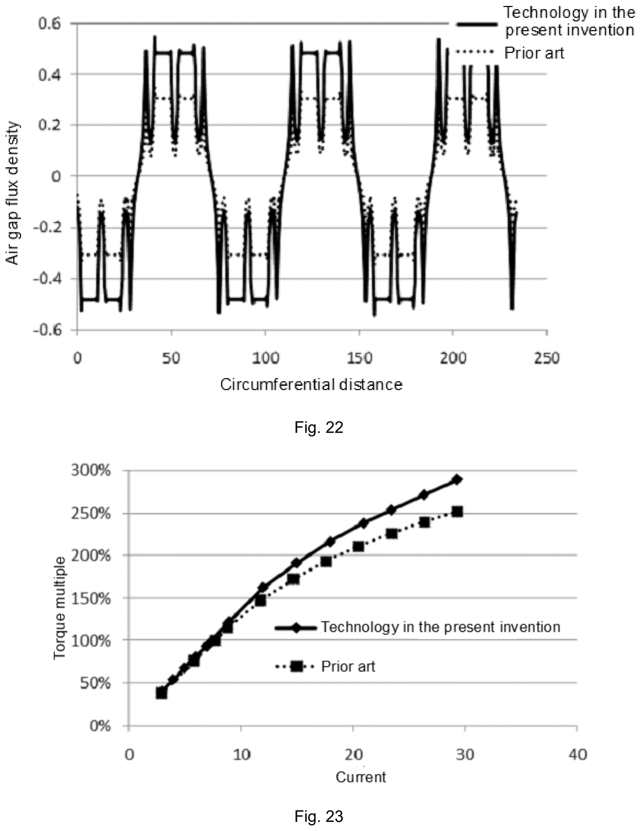

With reference to FIG. 22, compared with an electric motor in the related art, the air gap flux density of the motor that uses the rotor structure according to an embodiment of the present invention is increased by more than 60%, so that the air gap flux density is effectively increased, the torque density of the electric motor is improved, and the output power of the electric motor is increased.

With reference to FIG. 23, compared with an electric motor in the related art, advantages of torque multiple of the electric motor that uses the rotor structure according to an embodiment of the present invention are obviously gradually with increase of a current, so that a larger torque multiple is implemented, the torque density of the electric motor is increased, the output power of the electric motor is increased.

According to an embodiment of the present invention, the electric motor includes a stator structure and a rotor structure, where the rotor structure is the foregoing rotor structure.

It needs to be noted that the terms used herein just describe the specific mode of execution, but not expect to limit the exemplary modes of execution in the present invention. It is to be understood that the singular forms "a", "an", and "the" include plural referents unless the context clearly dictates otherwise. Moreover, it should be understood that the terms "contain" and/or "include" used in the specification indicate characteristics, steps, operations, devices, assemblies and/or their combination.

It needs to be noted that in the specification, claims, and accompanying drawings of the present invention, the terms such as "first" and "second" are intended to distinguish between similar objects but do not necessarily indicate a specific order or sequence. It should be understood that the data used in this way is interchangeable in appropriate circumstances so that the embodiments of the present invention described herein can be implemented in other orders than the order illustrated or described herein.

The foregoing descriptions are merely exemplary embodiments of the present invention, but are not intended to limit the present invention, and for the skill in the art, the present invention can be of various modifications and changes. Any modification, equivalent replacement, or improvement made without departing from the spirit and principle of the present invention shall fall within the protection scope of the present invention.

## Claims

1. A rotor structure, comprising a rotor core (11), first permanent magnets (12) and a second permanent magnet (21), wherein the rotor core (11) is provided with mounting recesses, the first permanent magnets (12) are mounted in the mounting recesses, and in an axial direction of the rotor core (11), an axial height of each of the first permanent magnets (12) is greater than an axial height of the rotor core (11);
the second permanent magnet (21) is arranged at an axial end of the rotor core (11), the second permanent magnet (21) is of an integrated structure and is provided with through grooves (22), and at least one end of the each of the first permanent magnets (12) protrudes from the rotor core (11) in the axial direction and is inserted into a corresponding one of the through grooves (22); and
the second permanent magnet (21) further comprises first permanent magnet limiting portions (23) and magnetic pole portions (24), and at least one of the first permanent magnet limiting portions (23) is provided between each pair of adjacent magnetic pole portions (24) and connects the pair of adjacent magnetic pole portions (24), such that the magnetic pole portions (24) form a whole.

2. The rotor structure according to claim 1, wherein the first permanent magnet limiting portions (23) are located on a radial outer side of the through grooves (22) and are disposed in correspondence with the through grooves (22), and the each of the first permanent magnet limiting portions (23) is connected with the second permanent magnet (21) on both sides in a circumferential direction.

3. The rotor structure according to claim 1, wherein through holes (25) are formed in a radial inner side of the second permanent magnet (21), and each of the through grooves (22) communicates with at least one of the through holes (25).

4. The rotor structure according to claim 3, wherein the through holes (25) are formed in a side of the mounting recesses of the rotor core (11) close to a central axis of the rotor core (11), and the through holes (25) penetrate through the rotor core (11) and the second permanent magnet (21).

5. The rotor structure according to claim 1, wherein the each of the first permanent magnets (12) is tangentially magnetized, and the second permanent magnet (21) is axially magnetized; and/or the each of the first permanent magnet limiting portions (23) comprises a radial projection, a cross-sectional shape of an outer peripheral surface of magnetic pole portions (24) on both sides of the radial projection is circular arcs, and a diameter of the circular arc is not greater than a diameter of an outer circle of the rotor structure.

6. The rotor structure according to claim 1, wherein the second permanent magnet (21) is injection-molded magnet steel.

7. The rotor structure according to claim 1, wherein at least one end of axial ends of the rotor core (11) is provided with the second permanent magnet (21).

8. The rotor structure according to claim 1, wherein the first permanent magnets (12) and the second permanent magnet (21) are both magnetic flux sources, and except the rotor core (11), other magnetic conductive parts are not arranged in the rotor structure.

9. The rotor structure according to any one of claims 1 to 8, wherein the axial height of the rotor core (11) is x, the axial height of the each of the first permanent magnets (12) is y, wherein y>x, and an axial height of the second permanent magnet (21) is z, wherein 0.2×(y-x)≤z≤1.2×(y-x).

10. The rotor structure according to claim 9, wherein z≤0.5×(y-x).

11. The rotor structure according to any one of claims 1 to 8, wherein an outer peripheral wall of the rotor core (11) comprises a plurality of circular arc surfaces disposed at intervals, and in a circumferential direction, a distance between the circular arc surfaces and a central axis of the rotor core (11) decreases from a middle to both ends.

12. The rotor structure according to any one of claims 1 to 8, wherein on a plane perpendicular to an axial direction of the rotor core (11), an outer diameter of the second permanent magnet (21) has a maximum value of Do2, and an outer diameter of the rotor core (11) has a maximum value of Do1, wherein Do2≤Do1.

13. The rotor structure according to any one of claims 1 to 8, wherein a polarity area of each of the magnetic pole portions (24) is disposed in correspondence with each of polarity areas of the rotor core (11).

14. The rotor structure according to claim 13, wherein the polarity area of the each of the magnetic pole portions (24) is adapted to an area shape of a corresponding polarity area of the rotor core (11), and the polarity area of the each of the magnetic pole portions (24) is filled in the corresponding polarity area of the rotor core (11).

15. The rotor structure according to claim 6, wherein the second permanent magnet (21) is injection-molded ferrite or injection-molded neodymium iron boron.

16. The rotor structure according to claim 1, wherein N and S poles of the second permanent magnet (21) are magnetized alternately in the axial direction of the rotor core (11).

17. The rotor structure according to claim 1 or 16, wherein a polarity of the second permanent magnet (21) on a side close to the rotor core (11) is a first polarity, and polarities of two first permanent magnets (12) located on two sides adjacent to the second permanent magnet (21) on sides close to the rotor core (11) are the first polarity.

18. The rotor structure according to claim 1, wherein each of the first permanent magnets (12) is a sintered permanent magnet or an injection-molded permanent magnet.

19. The rotor structure according to claim 1, wherein the rotor core (11) is formed by laminating silicon steel sheets, or, the rotor core (11) is an injection-molded magnet, and on a plane perpendicular to the axial direction of the rotor core (11), N and S poles of the rotor core (11) are magnetized alternately in a radial direction.

20. The rotor structure according to claim 3, wherein the rotor structure is filled with a molding compound at ends and internal gaps and is molded into a whole body, and the molding compound is filled in the through hole (25).

21. An electric motor, comprising a stator structure and the rotor structure according to any one of claims 1 to 20.
